# EUROPEAN PATENT APPLICATION

(11) **EP 1 127 753 A1**
(43) Date of publication of application: **29.08.2001**
(21) Application number: 99954373.9
(22) Date of filing: 04.11.1999
(51) Int. Cl.: B60R 21/16, B60R 21/32

(54) **AIR BAG GAS GENERATOR AND COOLANT THEREFOR**

(30) Priority: 04.11.1998 JP 31359098
(71) Applicant: Daicel Chemical Industries, Ltd., Osaka 590-8501 (JP)
(72) Inventor: WATASE, Takefumi, First Inn Hirohata 201, Himeji-shi, Hyogo 671-1153 (JP)
(74) Representative: Grünecker, Kinkeldey, Stockmair & Schwanhäusser Anwaltssozietät
(86) International application number: JP9906140
(87) International publication number: WO0026066

(57) **Abstract**

Objects of the present invention are to provide a porous member with sufficient strength, used for a gas generator for an air bag, which can be produced easily and inexpensively, and to provide a gas generator which can be produced inexpensively using these advantageous members. A gas generator for an air bag comprises in a cylindrical housing thereof with a plurality of gas discharge ports, an ignition means to be activated on an impact and gas generating means which is to be ignited and burnt by said ignition means and generate a combustion gas, wherein a molded product of a porous plate such as an expanded metal formed into a cylindrical shape by winding a porous plate member annularly is disposed in said housing coaxially.

## Description

### Technical Field Where the Present Invention Belongs

The present invention relates to a gas generator for an air bag for protecting an occupant from an impact, a coolant suitable for this gas generator for an air bag, and an air bag apparatus comprising this gas generator for an air bag.

### Prior Art

An air bag apparatus is mounted to a vehicle such as an automobile for protecting an occupant from an impact of collision. This air bag apparatus actuates a gas generator when a sensor detects an impact, and forms a cushion (air bag) between the passenger and the vehicle.

This gas generator is activated on an impact sensor detecting an impact, and discharges an actuating gas for inflating the air bag (bag body) . The actuating gas is usually cooled and/or purified by a coolant means accommodated in a housing of the gas generator and then, the gas is discharged from a gas discharge port of the housing and introduced into the air bag. A combustion gas generated in the gas generator is cooled and/or relatively large combustion residues are collected while the gas passes through the coolant means. Therefore, the coolant means which does not have sufficient strength may be deformed by a pressure of the gas when the combustion gas is cooled and/or purified. Accordingly, it is preferable that such a coolant means has sufficient strength to resist the pressure of the combustion gas.

Generally, as the coolant means, a wire mesh filter or the like formed by winding a wire mesh like a strip plate into a multiple-layered cylinder is conventionally used. Since this wire mesh filter is formed of the strip plate of a wire mesh, it is impossible to obtain the strength enough to resist the pressure of the combustion gas unless the wire mesh is rolled many times to have a considerable thickness or compress-formed.

Thereupon, JP-A 10-128022 discloses a rigid filter assembly for cooling a high temperature gas and collecting the combustion residues. This filter assembly is formed by helically winding expanded metals so that it can be produced continuously. However, the filter assembly formed in this way cannot be manufactured necessarily easily because it is necessary to weld the ends of junctures of the helically wound expanded metals in the circumferential direction in order to obtain the sufficient strength.

JP-A 11-43007 discloses an expanded metal formed in a cylinder.

US-A 5551724 discloses removal of particles in a gas by means of an expanded metal and a structure such that expanded metals are disposed on both sides, interposing a ceramic therebetween.

Further, when the coolant means and/or the filter means is formed conventionally using a molded product of wire mesh, an outer periphery of the laminated molded product of wire mesh is supported by a expansion suppressing means, which has a plurality of through holes on the peripheral surface of the cylindrical member thereof, so as to prevent the outer periphery from expanding due to a gas pressure generated when a combustion gas generated by combustion of a gas generating means passes. Such an expansion suppressing means is generally assembled in a separate procedure and therefore, a manufacturing cost is high. Consequently, development of a material at a reduced price as well as with the sufficient rigidity has been demanded. Disclosure of the Present Invention

Accordingly, the objects of the present invention are to solve the problems of the member used for the above-described conventional gas generator, particularly a wire mesh filter and a filter assembly formed by helically winding expanded metals, and to provide a member having a sufficient strength which can be produced easily and inexpensively, and to provide a gas generator which can be manufactured inexpensively using these advantageous members.

A gas generator for an air bag according to the present invention is characterized in that, in a housing thereof, a molded product formed using a porous plate member such as an expanded metal is disposed and used.

Namely, a gas generator for an air bag according to the present invention has, in a cylindrical housing thereof with a plurality of gas discharge ports, an ignition means to be activated on an impact and gas generating means which is to be ignited and burnt by the ignition means and generate a combustion gas, wherein a molded product of a porous plate which is formed into a cylindrical shape by winding a porous plate member annularly is disposed in the housing coaxially.

Preferably, a bulk density of the molded product of a porous plate is in a range of 3.0 to 5.0 g/cm³. The molded product of a porous plate comprises two or more layers of expanded metal, and may be formed after inserting a wire mesh inbetween or after superposing two or more layers of expanded metal so that the layers intersect crosswise of one another with respect to a longitudinal direction of openings of the porous plate.

As the porous plate member, a punching metal, an expanded metal or the like comprising a flat plate-like member having a large number of through holes can be used. Particularly when the expanded metal is used for the porous plate member, an molded product of an expanded metal formed by annularly winding the expanded metal into a cylindrical shape can be used as a molded product of a porous plate. In this molded product of an expanded metal, for example, an expanded metal formed of a cold rolled steel plate, an electrically zinc plated steel plate, a cold rolled stainless steel plate, or various plate materials such as aluminum, copper or brass is used. The expanded metal having the desired width is wound many times around a core having the outer diameter that is substantially equal to the desired inner diameter until the desired thickness is achieved, its winding end is spot-welded and then, the core is removed, and consequently, an molded product of an expanded metal having a desired shape can be formed. Since the joint ends of the expanded metal do not need to be welded in the circumferential direction, this molded product of an expanded metal can be produced easily.

When the molded product of a porous plate such as the molded product of an expanded metal disposed in the housing is used in a gas generator in which an internal pressure of the housing at the time of activation of the gas generator is controlled by the total opening area of the gas discharge ports, it is preferable that the pressure loss of the molded product of a porous plate in the radial direction is controlled to be smaller than the entire pressure loss of a plurality of gas discharge ports formed in the housing. The internal pressure of the housing at the time of activation of the gas generator is adjusted so as to appropriately burn the gas generating means and further to obtain a preferable activation performance of the gas generator, and optimal internal pressure of the housing varies depending upon combustion performance and the like of the gas generating means. Accordingly, the pressure loss in the radial direction of the molded product of a porous plate such as the molded product of a metal lath is appropriately adjusted based on the entire pressure loss of the gas discharging ports for obtaining the optimal internal pressure in the housing. The pressure loss in the radial direction of the molded product of a porous plate is adjusted by, for example, adjusting the ratio of opening areas of the porous plate member such as the expanded metal or the winding times when forming the molded product. When the internal pressure of the housing at the time of activation is not adjusted by the total opening area of the gas discharge ports, the internal pressure of the housing can be adjusted by controlling the pressure loss of the molded product of a porous plate such as the molded product of an expanded metal.

In the gas generator for the air bag according to the present invention, a pressure loss in the radial direction of the molded product of a porous plate such as the molded product of an expanded metal can be adjusted optionally. In addition, the molded product of a porous plate can be used like a wire mesh member such as the coolant means or a porous cylindrical member such as expansion suppressing means since the molded product of a porous plate is formed into the cylindrical shape having a sufficient strength. Thus, in view of the producing cost, easiness of production and the like, even when a laminated molded product of wire mesh is used as a coolant for purifying and/or cooling the combustion gas, the molded product of a porous plate such as the molded product of an expanded metal can be disposed as the expansion suppressing means for supporting the outer periphery of the coolant, a perforated basket which is disposed along the inner periphery of the coolant for preventing the direct contact between the coolant and the gas generating means, and the like. In particular, when the molded product of a porous plate is used as a coolant, a filter or the like, the cost can be reduced sufficiently.

When the molded product of a porous plate such as the molded product of an expanded metal is used as the coolant, i.e., when the molded product of a porous plate is disposed in the housing of the gas generator for the air bag in order to cool and/or purify the actuating gas discharged from the gas generator, the pressure loss of the molded product of a porous plate in the radial direction is adjusted to be smaller than the entire pressure loss of a plurality of gas discharge ports formed in the housing, by whereby it is possible to less influence the activation output of the gas generator. In the case that the molded product of an expanded metal is used as the coolant, the molded product of an expanded metal is formed preferably by using an expanded metal having, under the JIS G 3351, a plate thickness T of 0.05 to 0.6 mm, a strand width W of 0.3 to 1.5 mm, a distance SW between centers in a short direction of the mesh of 1.5 to 3 mm, a distance LW between centers in a long direction of the mesh of 1 to 6 mm and then, winding the expanded metal annually 5 to 25 times into a cylindrical shape. When the molded product of an expanded metal is used as the coolant, a bulk density of the molded product of a porous plate such as the molded product of an expanded metal is preferably adjusted in a range of 3.0 to 5.0 g/cm³. And when the porous plate member such as the expanded metal is wound many times in order to be used as a coolant or when two or more kinds of porous plate member layers such as the expanded metal layers are superposed on each other in the radial direction to form a laminated molded product of a porous plate in order to be used as a coolant, a ratio of opening areas of an inner layer of the molded product is greater than a ratio of opening areas of its outer layer, by whereby the inner layer is not clogged with combustion residues, and a collecting effect of the outer layer with respect to the combustion residue can be enhanced. When the molded product of a porous plate is formed into a laminated configuration by superposing layers of two or more kinds of porous plate members in a radial direction, particularly in the molded product of an expanded metal, it is possible to neatly align the long direction of each layer of the expanded metals. The coolant using the molded product of a porous plate such as the molded product of an expanded metal has a higher rigidity compared with a conventional wire mesh filter. Therefore, in the case that the coolant is long in the axial direction, e.g., the axial length is longer than its inner diameter, which is used to be difficult to form in the conventional wire mesh filter, a further remarkable effect can be exhibited. Further, a higher effective can be obtained if a ratio of a length in the axial direction to an inner diameter of the molded product of a porous plate is in a range of 1.2:1 to 4.6:1.

A gas generator using the molded product of a porous plate such as the molded product of an expanded metal as a coolant can be realized by using the molded product of a porous plate as the below coolant in a gas generator for the air bag having, in a housing thereof with a gas discharge port, an ignition means to be activated on an impact and gas generating means which is to be ignited and burnt by the ignition means and generate a combustion gas and a coolant for purifying and/or cooling the combustion gas.

Particularly when the molded product of an expanded metal is used for the molded product of a porous plate, the molded product of an expanded metal has a high rigidity all directions, i.e., in the axial direction and radial direction irrespective of whether the molded product of an expanded metal is cylindrical in shape in which its longer mesh comes along the axial direction or intersects the axial direction. For this reason, in the case of the gas generator in which the coolant using this is accommodated and secured by interposing by the inner surface of the housing, it is preferable that a member for preventing the short pass of the combustion gas or a cushion member which can extend and contract at least in the axial direction of the coolant is disposed on an upper end surface and/or a lower end surface of the coolant in the axial direction.

And the rigidity of the coolant can be enhanced in all directions by using the molded product of a porous plate such as the molded product of an expanded metal. Accordingly, particularly in the case of a gas generator having such a structure that its housing is cylindrical in shape whose axial length is longer than the outermost diameter and a peripheral wall of the housing includes a plurality of gas discharge ports, the molded product of a porous plate has a sufficient rigidity in all the directions and therefore, it is possible to preferably dispose the coolant as a coolant which is longer in the axial direction in the housing. Further, in the case of a gas generator in which the interior space of the housing is divided, by a sectioning member, into a combustion chamber where at least gas generating means is accommodated and a coolant accommodating chamber where the coolant is accommodated, and both chambers are adjacent to each other in the axial direction of the housing, the coolant comprises the molded product of a porous plate and has a sufficient rigidity and therefore, movement of the sectioning member can be reliably prevented.

Further, in a gas generator using the molded product of a porous plate as a coolant, a filter for sufficiently eliminating combustion residues included in a combustion gas generated by the combustion of the gas generating means can be additionally accommodated. As the filter, a conventional filter used for eliminating the combustion residues can be used.

As another embodiment of the present invention, there is provided a gas generator for an air bag having, in a cylindrical housing thereof with a plurality of gas discharge ports, an ignition means to be activated on an impact and a gas generating means which is to be ignited and burnt by the ignition means and generate a combustion gas, wherein a molded product of a porous plate which is formed into a cylindrical shape by winding a porous plate member annularly is disposed in the housing coaxially, and the porous plate member has SW in a range of 0.5 to 3, LW in a range of 1 to 6, W in a range of 0.1 to 1.5 and T in a range of 0.05 to 0.6.

It is preferable that in the porous plate member, the SW is in a range of 1 to 2, the LW is in a range of 2 to 3, the W is in a range of 0.3 to 0.8 and the T is in a range of 0.2 to 0.5, and an expanded metal(or metal lath) may be used. The porous plate member whose SW/ LW may be small, i.e., an opening ratio of the porous plate member may be small may be used as well.

The porous plate member may be a wire mesh having a wire's diameter in a range of 0.055 to 0.45 mm and a mesh of 20 to 1000.

In the present invention, it is preferable that a pressure loss of the molded product of a porous plate in the radial direction is smaller than the entire pressure loss of a plurality of gas discharge ports formed in the housing.

Additionally, it is preferable that a bulk density of the molded product of a porous plate is in a range of 3.0 to 5.0 g/cm³.

In the present invention, the molded product of a porous plate can comprise two or more layers of expanded metal, and the layers can be superposed so that ratios of the openings or ratios of opening areas can be changed. Preferably, the layers are superposed so that one layer having a smaller opening ratio comes outer side and the other layer having a greater opening ratio comes inner side. Alternatively, the layers are formed so that one having a smaller opening ratio becomes an outermost periphery.

As examples of the molded product formed into such a multi-layer configuration, the molded product may be formed by superposing two or more different kinds of expanded metals, or by superposing two or more layers of the expanded metals so that the opening ratios of thereof are the same.

In another example, the molded product of a porous plate may comprise two or more layers of expanded metal with a wire mesh inserted inbetween. Alternatively, the molded product of a porous plate may be formed by superposing two or more layers of expanded metal so that the layer having a smaller opening ratio comes outer side and the layer having a greater opening layer comes inner side and then, inserting a wire mesh inbetween.

Preferably, the molded product of a porous plate may be formed by two or more layers of expanded metal so that the outermost periphery layer comprises one or two, a wire mesh is inserted inbetween, and inner periphery comprises two or more layers. Further, the molded product of a porous plate may be formed by two or more layers of expanded metal and a plain dutch wire mesh is inserted inbetween.

In the case of the three-layer structure having a wire mesh in the intermediate portion, the generated gas is cooled in the inner peripheral portion, the combustion residues are eliminated in the intermediate layer, and the molded product is restrained from extending and expanding in the outermost peripheral layer. Although the axial pressure of the gas generator disposed in a front passenger side is great, the molded product of a porous plate can resist the pressure, and does not expand in the circumferential direction.

In another example, the molded product of a porous plate has a plain dutch wire mesh or a twilled dutch wire mesh at its outermost layer.

In the present invention, two or more layers of the expanded metal may be superposed so that they intersect crosswise of one another with respect to the longitudinal directions of the opening.

The gas generator according to the present invention is mounted on a front passenger side or a driver side. It is preferable that, in the molded product of a porous plate, a ratio of a length in the axial direction to an inner diameter is in a range of 0.3:1 to 5.0:1.

In a front passenger side, the gas generator, whose housing has a cylindrical shape and the length thereof in the axial direction is longer than the outermost diameter thereof, and a plurality of gas discharge ports on the peripheral wall thereof, is used, and a ratio of a length in the axial direction to the inner diameter of the molded product of a porous plate is in a range of 1.2:1 to 4.6:1.

The molded product of a porous plate can be formed by spot-welding a winding end of the expanded metal, i.e., an end thereof in the longitudinal direction and winding the expanded metal. This winding end may be spot-welded. For example, opposite ends thereof in the axial direction of the cylinder may be welded. Further, a center portion in the axial direction may be welded at one or more, i.e., three or more points at equal intervals. Resistance welding may be carried out.

Further, the present invention provides a gas generator for an air bag in which the molded product of a porous plate is a coolant, and a cushion member which can extend and contract at least in the axial direction of the coolant is disposed on the upper end surface and/or the lower end surface of the coolant in the axial direction.

The present invention provides a gas generator for an air bag characterized in that an ignition means to be activated on an impact and gas generating means which is to be ignited and burnt by the ignition means and generate a combustion gas are accommodated in a cylindrical housing of the gas generator with a plurality of gas discharge ports, wherein, in the housing, a molded product of a porous plate which is formed into a cylindrical shape by winding a porous plate member annularly is disposed in the housing as a coaxial coolant, and the porous plate member has SW in a range of 0.5 to 3, LW in a range of 1 to 6, W in a range of 0.1 to 1.5 and T in a range of 0.05 to 0.6. The above-described molded product of a porous plate and the expanded metal can be used for this coolant.

The present invention provides an air bag apparatus comprising a sensor for detecting an impact, a gas generator to be activated when the sensor detects an impact to generate a gas, an air bag to introduce therein the gas generated by the gas generator and inflate, and a module case for accommodating the gas generator and the air bag, wherein the gas generator for the air bag is the one described above. Further, the present invention provides a coolant of a gas generator for an air bag characterized in that the coolant is a molded product of a porous plate formed by winding a porous plate member annularly into a cylindrical shape, wherein the porous plate member has SW in a range of 0.5 to 3, LW in a range of 1 to 6, W in a range of 0.1 to 1.5 and T in a range of 0.05 to 0.6.

The gas generator for an air bag includes, in a housing thereof, ignition means to be activated on an impact and gas generating means which is to be ignited and burnt by the ignition means and generate a combustion gas.

As the ignition means, a known ignition means to be activated on an impact such as mechanical ignition type igniter means or electric ignition type igniter means can be used. In particular, the electric ignition type igniter means is activated based on an electric signal (or activation signal) transmitted from an impact sensor or the like detecting an impact, and this igniter means may comprise an igniter to be activated based on an electric signal transmitted from an electric sensor detecting an impact exclusively by an electric or electronic mechanism such as a semiconductor type acceleration sensor, and a transfer charge to be ignited and burnt on activation of the igniter.

As the gas generating means, azide gas generating agent based on conventionally used inorganic azide such as sodium azide as well as non-azide gas generating agent not based on inorganic azide can be used. As the non-azide gas generating agent, various compositions, for example, a composition containing, as a main component, a nitrogen containing organic compound such as tetrazole, triazole and a metallic salt thereof and an oxygen containing oxidant such as an alkali metal nitrate, a composition using a triaminoguanidine nitrate, a carbohydroazide, a nitroguanidine, etc. as a fuel and nitrogen source and using a nitrate, a chlorate, a perchlorate, etc. of an alkali metal or an alkaline earth metal as an oxidant, can be used. In addition to the above, the gas generating means may be appropriately selected in accordance with requirement such as burning rate, non-toxicity, combustion temperature, decomposition starting temperature, etc.. From a view of safety, non-azide gas generating agent is preferable.

Further, in the gas generator of the present invention, known structures, methods and the like which have advantageous functions for the structure of the gas generator can be properly used. Examples thereof are a short pass preventing means for closing a gap between the coolant and a structure supporting the coolant in order to prevent the combustion gas from passing through the gap, a gap provided between the outer peripheral surface of the coolant and the inner peripheral surface of the housing, composition and shape of the gas generating agent suitable for actuating the gas generator.

According to the present invention, the molded product of a porous plate comprising the porous plate member such as the molded product of an expanded metal formed into a cylindrical shape using the expanded metal is inexpensive and has sufficient strength. Therefore, a coolant using this, expansion suppressing means (outer layer) of the coolant and the like have sufficient strength for activation of the gas generator for the air bag, and production thereof is easy, and the producing cost is low. Consequently, a gas generator using them can be produced inexpensively.

### Brief Description of the Drawings

Fig.1 is a longitudinal sectional view showing one embodiment of a gas generator of the present invention.

Fig.2 is an enlarged view of an essential portion of an expanded metal.

Figs.3a and 3b are schematic views showing production process of an molded product of an expanded metal.

Fig.4 is a longitudinal sectional view showing another embodiment of the gas generator for air bag of the present invention.

Fig.5 is a longitudinal sectional view showing still another embodiment of the gas generator for air bag of the present invention.

Fig.6 is a view showing a structure of an air bag apparatus of the present invention.

Fig.7 is a plan view showing a molded product comprising two expanded metals superposed so that they intersect crosswise one another.

### Description of Reference Numerals

- 3: housing
- 4: igniter
- 5: transfer charge
- 6: gas generating agent
- 7: coolant
- 14: initiator collar
- 22: combustion chamber
- 23: ignition means accommodating chamber
- 60: expanded metal
- 61: expanded metal layer
- 151: outer layer

### Description of Preferred Embodiment of the Invention

The gas generator for air bag according to the present invention will hereinafter be described on the basis of the embodiments shown in the drawings.

### Embodiment 1

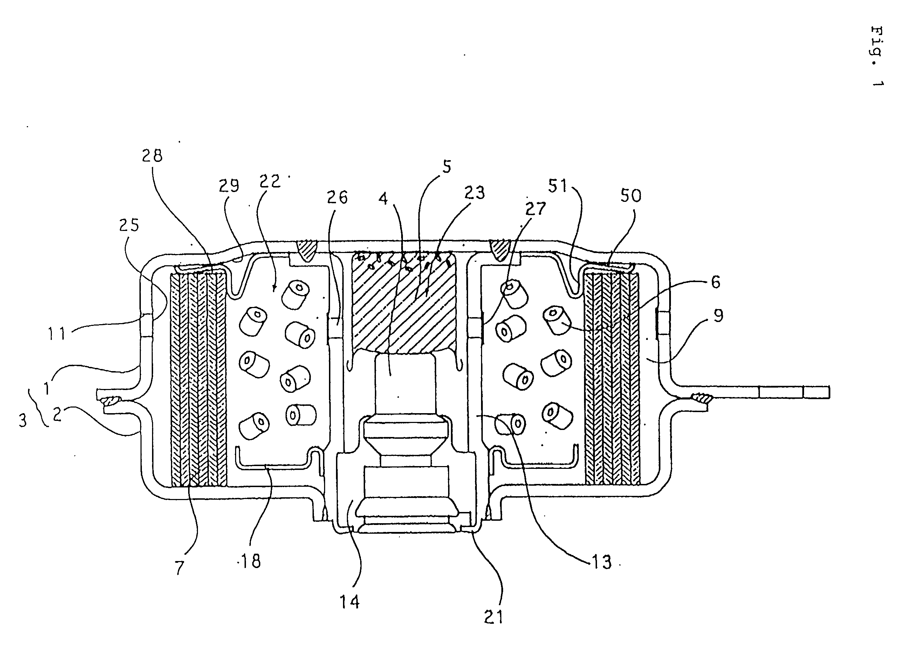

Fig.1 is a longitudinal sectional view showing a Embodiment 1 of a gas generator for an air bag of the present invention.

This gas generator comprises a housing 3 formed by joining a diffuser shell 1 having a gas discharge port 11 and a closure shell 2 forming an inner accommodating space together with the diffuser, and a inner cylinder member 13 in a substantially cylindrical shape disposed in the housing concentrically and an ignition means accommodating chamber 23 defined inside the inner cylinder member 13 and a combustion camber 22 defined outside the inner cylinder member 13. In the ignition means accommodating chamber 23, a ignition means comprising an electric ignition type igniter 4 to be activated on an impact and an transfer charge 5 which is to be ignited on the activation of the igniter and generate a flame is accommodated. And in the combustion chamber 22, a gas generating agent 6 to be ignited and burnt by the flame of the transfer charge 5 and generate a combustion gas is accommodated, being supported by an under plate 18. The igniter 4 is fixed in an initiator collar 14 made of iron, and a skirt of the initiator collar 14 is fixed to a lower end 21 of the inner cylinder member 13 by crimping. By making the initiator collar 14 of iron, the igniter can be reliably fixed in the gas generator even under high temperature. With this feature, even when the gas generator is ignited under a high temperature, the initiator collar can sufficiently resist a combustion internal pressure without lowering its strength and can maintain its ability and function.

The inner cylinder member 13 defining the combustion chamber 22 and the ignition means accommodating chamber 23 is provided with a flame-transferring hole 26 closed by a seal tape 27. Since the seal tape 27 is ruptured by a flame of the transfer charge 5, the ignition means accommodating chamber 23 and the combustion chamber 22 can be in communication with each other through the flame-transferring hole 26.

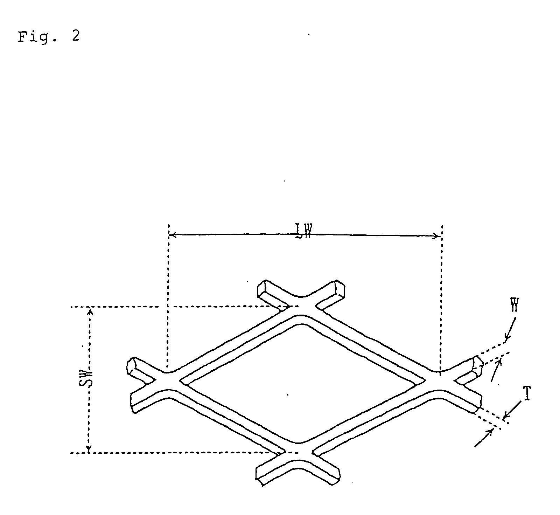

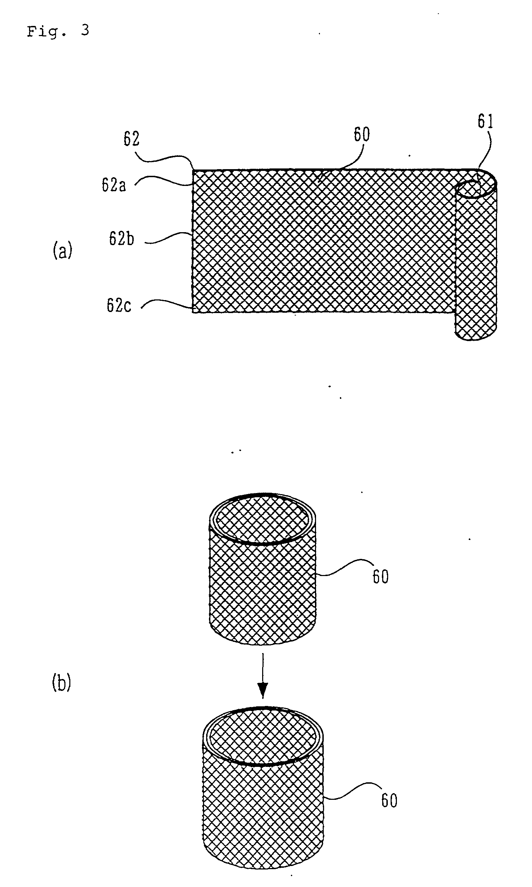

A substantially cylindrical coolant 7 using an molded product of an expanded metal as a molded product of a porous plate is disposed such as to surround the outer periphery of the combustion chamber 22 storing the gas generating agent 6. The coolant 7 is for purifying and/or cooling a combustion gas generated by combustion of the gas generating agent 6. As shown in Fig.2 which is an enlarged view of an essential portion of the expanded metal, the molded product of an expanded metal comprises a cold rolled steel plate, and can be formed into a laminated configuration using a flat plate-like expanded metal having, under the JIS G 3351, a plate thickness T of 0.05 to 0.6 mm, a strand width W of 0.3 to 1.5 mm, a distance SW between centers in a short direction of the mesh of 1.5 to 3 mm, a distance LW between centers in a long direction of the mesh of 1 to 6 mm. More specifically, the molded product of an expanded metal may be formed by winding an expanded metal 60 annularly many times (preferably 5 to 25 times) into a laminated configuration as shown in Fig.3(a), or by superposing, in the radial direction, two or more kinds of expanded metal layers 61 which have been wound one or more times to form the laminated configuration as shown in Fig.3(b). This molded product of an expanded metal is formed only by winding the expanded metal annularly and spot-welding the winding end and thus, easily produced because difficult process such 'as welding of the ends of junctures in the circumferential direction is not required. Besides, in this case, it is preferable that the wind-starting end 61 and the winding end 62 of the molded product of an expanded metal and the expanded metal layer meet each other end in the radial direction. In the molded product of an expanded metal formed into the laminated configuration, when a ratio of opening areas of its inner layer is required to be greater than a ratio of opening areas of an outer layer, this can be realized by using an expanded metal which is formed so that the size of the mesh is gradually becomes smaller along the winding direction, or forming expanded metal layers having a layer with large mesh on the inner side and a layer with small mesh on the outer side.

Particularly, in the gas generator shown in the present embodiment, an internal pressure when the gas generating agent 6 in the housing 3 is burnt is adjusted by the sum total opening area ("total opening area" hereinafter) of all the gas discharge ports 11 formed in the diffuser shell 1. And a pressure loss of the coolant 7 in the radial direction is set smaller than a pressure loss of all gas discharge ports 11.

Since the coolant 7 comprising the molded product of an expanded metal has high rigidity without resilience in the axial direction, and in the present embodiment, a cushion member 50 which can expand and contract at least in the axial direction is disposed on the upper end surface 28 of the coolant 7 in the axial direction. By welding the diffuser shell 1 and the closure shell 2, the cushion member 50 contracts in the axial direction, and the coolant can be interposed between both the shell by the resilience of the cushion member 50. As shown in the present embodiment, the cushion member 50 can also be integrally formed with a short pass preventing portion 51 which covers the inner peripheral surface of the coolant 7 on the diffuser shell 1 side so as to prevent the combustion gas from passing between the end surface of the coolant 22 and a ceiling inner surface 29 of the diffuser shell 1. With this design, the cushion member can be fixed to the coolant and prevent a short pass of the combustion gas. A gap 9 is provided outside the coolant 7 so that the combustion gas can pass through the entire surface of the coolant 7.

The gas discharge ports 11 formed in the diffuser shell 1 are closed by a seal tape 25 to stop entering of the outside air. The seal tape 25 is ruptured when the gas is discharged. This seal tape 25 is for protecting the gas generating agent from the outside moisture, and has no effect on adjusting performance such as combustion internal pressure.

In the gas generator constructed in the above-described manner, the electric ignition type igniter 4 is activated by an activation signal outputted based on the sensor detecting an impact, and ignites and burns the transfer charge 5. A flame of the burnt transfer charge 5 is discharged from the flame-transferring hole 26 of the inner cylinder member 13 into the combustion chamber 22, and then ignites and burns the gas generating agent 6 in the combustion chamber 22. By the combustion of the gas generating agent 6, a large amount of combustion gas is generated. The combustion gas is cooled while the gas passes through the coolant 7, the combustion residues in the gas are collected, and the gas ruptures the seal tape 25 and is discharged from the gas discharge ports 11.

In the present embodiment, when the combustion residues included in the combustion gas are to be removed more, the outer periphery of the coolant can be surrounded with a cylindrical filter comprising a metal wire fine mesh.

### Embodiment 2

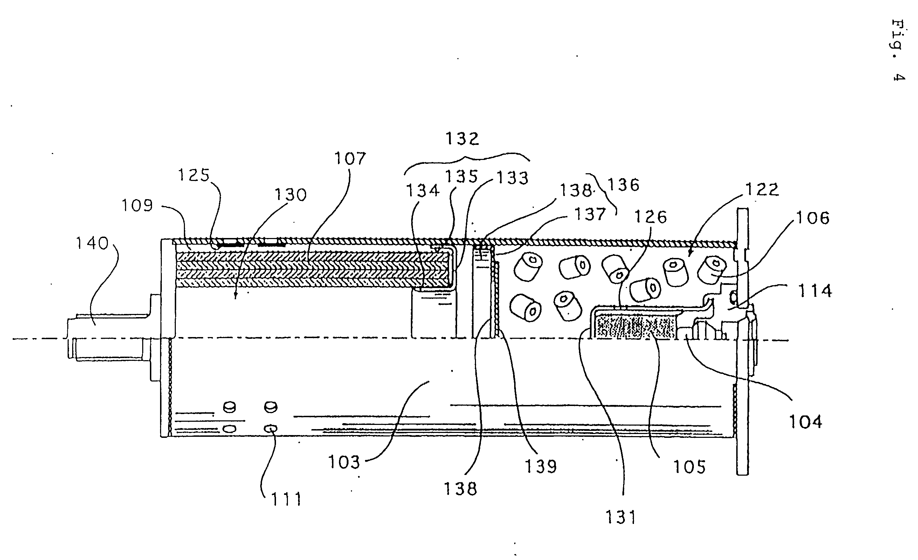

Fig.4 is a longitudinal sectional view showing another embodiment of the gas generator for air bag according to the present invention. This gas generator has a structure particularly suitable for disposing on a front passenger side.

The gas generator shown in this drawing uses a cylindrical housing 103 having an axial length longer than outermost diameter. An interior space of the housing 103 is divided into a combustion chamber 122 storing a gas generating agent 106 and a coolant accommodating chamber 130 accommodating a coolant 107. Both the chambers are connected in contact with each other in the axial direction. In the portion of a peripheral wall of the housing 103 where the coolant accommodating chamber 130 is provided, a plurality of gas discharge ports 111 are formed. The gas discharge ports 111 are closed by seal tapes 125 for moisture proof inside the housing 103.

In addition to the gas generating agent 106, ignition means including an electric ignition type igniter 104 to be activated on an impact and an transfer charge 105 which is to be ignited and burnt on activation of the igniter 104 and generate a flame is disposed in the combustion chamber 122. In Fig.4, the ignition means is formed as a structure comprising an initiator collar 114 fixed on the end surface of the housing, an igniter 104 secured to the initiator collar 114, an transfer charge 105 disposed adjacent to the igniter 104, and a cylindrical container 131 surrounding the transfer charge 105 and fixed to the initiator collar 114.

The coolant 107 disposed in the coolant accommodating chamber 130 is for purifying and/or cooling a combustion gas generated in the combustion chamber 122, and an molded product of an expanded metal formed in the same manner as that of the Embodiment 1 is used. The coolant 107 is cylindrical in shape, and an end thereof on the combustion chamber 122 side is supported by a coolant supporting member 132, and the coolant 107 is disposed coaxially such as to oppose to the inner peripheral surface of the housing 103. A gap 109 having a predetermined width and functioning as a gas passage is provided between the outer peripheral surface of the coolant 107 and an inner peripheral surface of the housing 103. In the present embodiment, the coolant supporting member 132 is formed by providing peripheral walls on the inner periphery and the outer periphery of an annular portion 133 having substantially the same shape as an end of the coolant 107. The inner periphery of the coolant 107 is supported by a peripheral wall 134 of the inner peripheral side, and a peripheral wall 135 of the outer peripheral side is interposed by the inner peripheral surface of the housing 103.

A sectioning member 136 for dividing the combustion chamber 122 and the coolant accommodating chamber 130 comprises a circular portion 137 for closing the housing in the radial direction, and a peripheral wall 138 integrally formed with a peripheral edge of the circular portion 137. The circular portion 137 is provided with a communication hole 138 for communicating both chambers. A combustion gas generated in the combustion chamber 122 reaches the coolant accommodating chamber 130 through the communication hole 138. In the present embodiment, the sectioning member 136 is provided with a communication hole 138 having substantially the same size as an inner diameter of the coolant 107. A wire mesh 139 is disposed on the communication hole 138 so that the gas generating agent 106 in the combustion chamber 122 should not move into the coolant accommodating chamber 130 at combustion. Any kind of wire mesh is used for the wire mesh 139 as long as a size of mesh is good enough to stop movement of the gas generating agent 106 at combustion without ventilation resistance capable of controlling the combustion performance. Naturally, an expanded metal can be used instead of the wire mesh.

In the gas generator in the present embodiment, the transfer charge 105 is burnt by activation of the ignitor 104 based on an activation signal transmitted from an impact sensor or the like detecting an impact, and the flame ejects from the flame-transferring hole 126 formed in the cylindrical container 131 and then, ignites and burns the gas generating agent 106. A combustion gas generated by the combustion of the gas generating agent 106 flows into the coolant accommodating chamber 130 through the communication hole 138 of a partition wall 136. The combustion gas passes through the entire surface of the coolant 107 and is purified and cooled, and ruptures the seal tapes 125 and is discharged from the gas discharge ports 111.

In Fig.4, the numeral 140 designates a stud bolt for mounting the gas generator to a module case.

### Embodiment 3

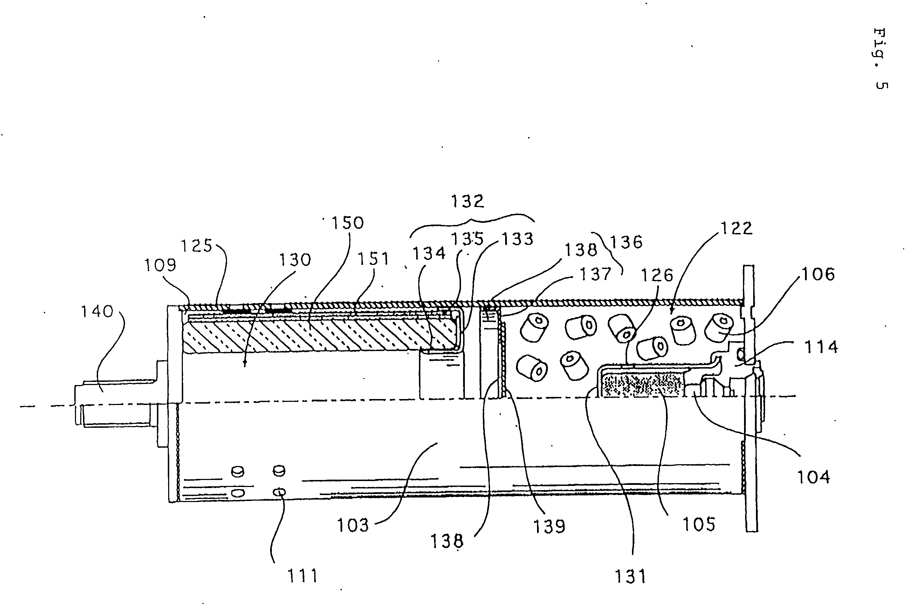

Fig.5 is a longitudinal sectional view showing another embodiment of the gas generator for air bag according to the present invention. This gas generator is also especially suitable for disposing on a front passenger side like the gas generator shown in Fig.4. In particular, an molded product of an expanded metal as a molded product of a porous plate is used for an outer layer 151 for suppressing a coolant/filter 150 for cooling and/or purifying a combustion gas from expanding when the combustion gas passes.

That is, the gas generator shown in Fig.5 uses a cylindrical housing 103 having an axial length longer than outermost diameter. An interior space thereof is divided into a combustion chamber 122 storing a gas generating agent 106 and a coolant accommodating chamber 130 accommodating a coolant filter 150. Both chambers are connected in contact with each other in the axial direction. In the portion of a peripheral wall of the housing 103 where the coolant accommodating chamber 130 is provided, a plurality of gas discharge ports 111 are formed. The gas discharge ports 111 are closed by seal tapes 125 for moisture proof inside the housing 103. As in Fig.4, in addition to the gas generating agent 106, ignition means including an electric ignition type igniter 104 and an transfer charge 105 is disposed in the combustion chamber 122.

The coolant filter 150 disposed in the coolant accommodating chamber 130 is for cooling and/or purifying a combustion gas generated by combustion of the gas generating agent 106, and uses a laminated molded product of wire mesh 150 formed by compress-molding a wire mesh annular laminated member made of appropriate material. With this feature, the coolant filter 150 has both a cooling function and a purifying function of the combustion gas. Such a coolant filter 150 can be formed by forming a plain stitch stainless steel wire mesh into a cylindrical body, bending repeatedly one end of the cylindrical body outwardly to form an annular laminated body, and compress-molding the same in a die, or by forming a plain stitch stainless steel wire mesh into a cylindrical body, pressing the cylindrical body in the radial direction to form a plate body, winding many times the plate body into a cylindrical configuration, and compress-molding the same in a die. In this embodiment, the same effect can be obtained by conventional various coolants or filters comprising laminated molded product of wire mesh used for purifying a combustion gas and/or for cooling the generated combustion gas.

An outer periphery of the coolant filter 150 is covered with an outer layer 151 which is formed annularly. The outer layer 151 is for suppressing the coolant/filter 150 from expanding due to a pressure of a gas generated when the combustion gas passes, and an molded product of an expanded metal formed into annular configuration using an expanded metal is used. In the present embodiment, the outer layer 151 is formed such as to cover the entire outer periphery of the coolant filter 150 comprising the laminated molded product of wire mesh, and additionally, a belt-like molded product of an expanded metal comprising annularly formed belt-like expanded metal with a predetermined width can also be used. Such a molded product of an expanded metal has a high rigidity and relatively inexpensive and therefore, serves as an advantageous outer layer in manufacturing the gas generator.

In the gas generator shown in Fig.5, members which are the same as those shown in Fig.4 are designated with the same numerals, and its explanation will be omitted.

### Embodiment 4

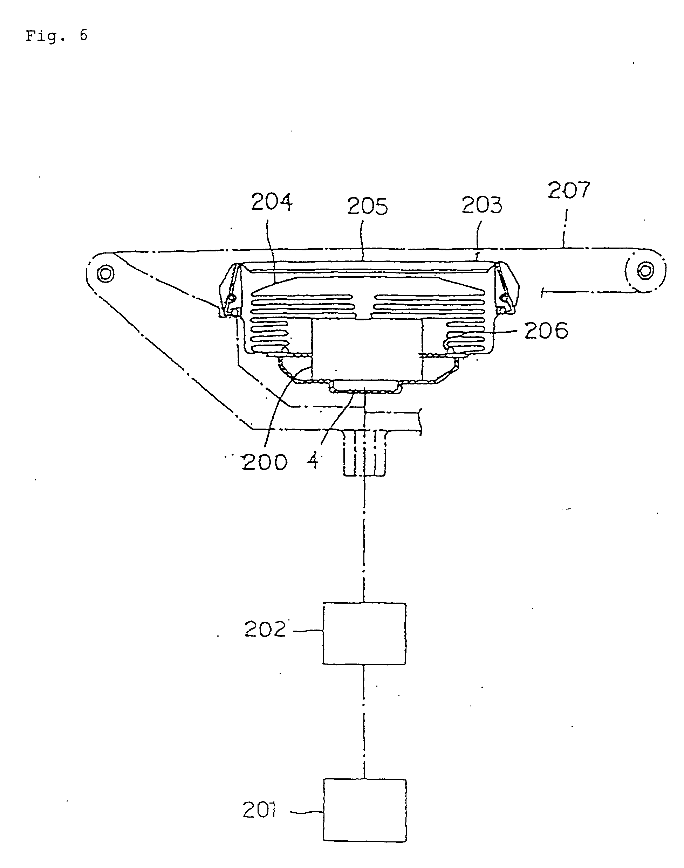

Fig.6 shows an embodiment of an air bag apparatus of the present invention provided with a gas generator using an electric ignition type igniter means.

This air bag apparatus comprises a gas generator 200, an impact sensor 201, a control unit 202, a module case 203 and an air bag 204. As the gas generator 200, the gas generator explained based on Fig.1 is used, and its activation performance is adjusted to give an occupant as a small impact as possible at the initial activation stage of the gas generator.

The impact sensor 201 can comprise a semiconductor type acceleration sensor for example. In the semiconductor type acceleration sensor, four semiconductor strain gauges are formed on a beam of a silicon substrate designed to bend when acceleration is applied, and these semiconductor strain gauges are bridge-connected. When the acceleration is applied, the beam is bent, and strain is generated on its surface. The resistance of the semiconductor strain gauge is changed due to this strain, and the change in resistance is detected as a voltage signal in proportion to the acceleration.

The control unit 202 includes an ignition judging circuit to which a signal from the semiconductor type acceleration sensor is inputted. The control unit 202 starts calculation when the impact signal from the sensor 201 exceeds a certain value, and when the calculated result exceeds a certain value, the control unit outputs an activation signal to the igniter 4 of the gas generator 200.

The module case 203 is formed of polyurethane for example, and includes a module cover 205. The air bag 204 and the gas generator 200 are accommodated in the module case 203, thereby forming a pad module. When the pad module is mounted on the driver side of an automobile, the pad module is usually mounted to a steering wheel 207.

The air bag 204 is formed of nylon (e.g., nylon 66) or polyester, its bag opening 206 surrounds the gas discharge port of the gas generator, and the air bag 204 is fixed to a flange of the gas generator in its folded state.

When the semiconductor type acceleration sensor 201 senses an impact at the time of collision of an automobile, its signal is sent to the control unit 202, and when the impact signal from the sensor exceeds the certain value, the control unit 202 starts calculation. When the calculated result exceeds the certain value, the control unit outputs an activation signal to the igniter 4 of the gas generator 200. With this activation, igniters (12a, 12) are activated to ignite the gas generating agent, and the gas generating agent is burnt to generate a gas. This gas is ejected into the air bag 204, thereby allowing the air bag to break the module cover 205 and inflate to form a cushion for absorbing an impact between the steering wheel 207 and the occupant.

### Embodiment 5

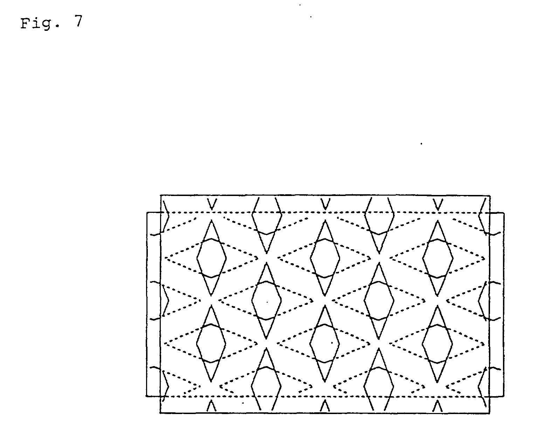

Fig.7 shows superposed molded product of a porous plate so that two or more layers of expanded metals are intersecting crosswise of one another in the longitudinal direction of the opening.

### Embodiment 6

Fig.3 shows that a molded product of a porous plate 60 is formed by winding an expanded metal, and spot-welding a winding end 62, i.e., the end thereof in the longitudinal direction. Both ends 62a, 62c in the axial direction of the cylinder, and further a center portion 62b in the axial direction may be welded at one point or more, or three points or more at equal intervals.

## Claims

1. A gas generator for an air bag comprising, in a cylindrical housing thereof with a plurality of gas discharge ports, an ignition means to be activated on an impact and gas generating means that is to be ignited and burnt by said ignition means and generate a combustion gas, wherein a molded product of a porous plate formed into a cylindrical shape by winding a porous plate member annularly is disposed in said housing coaxially.

2. A gas generator for an air bag according to claim 1, wherein a pressure loss of said molded product of a porous plate in the radial direction is smaller than the entire pressure loss of said plurality of gas discharge ports formed in said housing.

3. A gas generator for an air bag according to claim 1 or 2, wherein said porous plate member is an expanded metal, and said molded product of a porous plate is an molded product of an expanded metal which is formed by annularly winding said expanded metal into a cylindrical shape.

4. A coolant of a gas generator for an air bag which is disposed in a housing of said gas generator for the air bag in order to cool and/or purify an actuating gas discharged from said gas generator, wherein said coolant is a molded product of a porous plate formed by annularly winding a porous plate member into a cylindrical shape.

5. A coolant of a gas generator for an air bag according to claim 4, wherein a pressure loss of said molded product of a porous plate in the radial direction is smaller than the entire pressure loss of said plurality of gas discharge ports formed in said housing.

6. A coolant of a gas generator for an air bag according to claim 4 or 5, wherein said molded product of a porous plate is formed into a laminated configuration by winding a porous plate member many times or by superposing layers comprising two or more kinds of porous plate members in the radial direction of said molded product of a porous plate, and a ratio of opening areas of an inner layer of said laminated configuration is greater than a ratio of opening areas of its outer layer.

7. A coolant of a gas generator for an air bag according to any one of claims 4 to 6, wherein a ratio of a length in the axial direction to an inner diameter of said molded product of a porous plate is in a range of 1.2:1 to 4.6:1.

8. A coolant of a gas generator for an air bag according to any one of claims 4 to 7, wherein said porous plate member is an expanded metal, and said molded product of a porous plate is an molded product of an expanded metal which is formed by annularly winding said expanded metal into a cylindrical shape.

9. A coolant of a gas generator for an air bag according to claim 8, wherein said molded product of an expanded metal is formed by annularly winding an expanded metal 5 to 25 times into a cylindrical shape and said expanded metal has, under the JIS G 3351, a plate thickness T of 0.05 to 0.6 mm, a strand width W of 0.3 to 1.5 mm, a distance SW between centers in a short direction of the mesh of 1.5 to 3 mm, a distance LW between centers in a long direction of the mesh of 1 to 6 mm.

10. A gas generator for an air bag comprising in a housing thereof with a gas discharge port an ignition means to be activated on an impact and gas generating means which is to be ignited and burnt by said ignition means and generate a combustion gas and a coolant for purifying and/or cooling said combustion gas, wherein
said coolant is the one described in any one of claims 4 to 9.

11. A gas generator for an air bag according to claim 10, wherein a cushion member which can extend and contract at least in the axial direction of said coolant is disposed on the upper end surface and/or the lower end surface of said coolant in the axial direction.

12. A gas generator for an air bag according to claim 10 or 11, wherein said housing is cylindrical in shape whose length in the axial direction is longer than its outermost diameter, and a peripheral wall of said housing has a plurality of gas discharge ports.

13. A gas generator for an air bag according to any one of claims 10 to 12, wherein the interior space of said housing is divided into a combustion chamber storing at least gas generating means and a coolant accommodating chamber accommodating said coolant, and both said chambers are adjacent to each other in the axial direction of said housing.

14. An air bag apparatus comprising
a sensor for detecting an impact,
a gas generator activated to generate a gas when said sensor detects an impact,
an air bag introducing therein the gas generated by said gas generator so as to inflate, and
a module case for accommodating therein said gas generator and said air bag, wherein
said gas generator for the air bag is the one described in any one of claims 1, 2, 3 and 10 to 13.

15. A gas generator for an air bag comprising in a cylindrical housing thereof having a plurality of gas discharge ports, an ignition means to be activated on an impact and gas generating means which is to be ignited and burnt by said ignition means and generate a combustion gas, wherein a molded product of a porous plate formed into a cylindrical shape by annularly winding a porous plate member is disposed in said housing coaxially, and said porous plate member has SW in a range of 0.5 to 3, LW in a range of 1 to 6, W in a range of 0.1 to 1.5 and T in a range of 0.05 to 0.6.

16. A gas generator for an air bag according to claim 15, wherein said SW is in a range of 1 to 2, said LW is in a range of 2 to 3, said W is in a range of 0.3 to 0.8 and said T is in a range of 0.2 to 0.5.

17. A gas generator for an air bag according to claim 15, wherein said porous plate member is an expanded metal.

18. A gas generator for an air bag according to claim 15, wherein SW/LW is small, i.e., an opening ratio of said porous plate member is small.

19. A gas generator for an air bag according to claim 15, wherein said porous plate member is an expanded metal and a wire mesh having a wire's diameter in a range of 0.055 to 0.45 mm, and a mesh of 20 to 1000.

20. A gas generator for an air bag according to claim 15 or 17, wherein a pressure loss of said molded product of a porous plate in the radial direction is smaller than the entire pressure loss of said plurality of gas discharge ports formed in said housing.

21. A gas generator for an air bag according to claim 15 or 17, wherein a bulk density of said molded product of a porous plate is in a range of 3.0 to 5.0 g/cm³.

22. A gas generator for an air bag according to claim 15, wherein said molded product of a porous plate comprises two or more layers of expanded metal, and said layers are superposed so that a layer with a smaller opening ratio comes outer side and a layer with a greater opening ratio comes inner side.

23. A gas generator for an air bag according to claim 15, wherein said molded product of a porous plate comprises two or more layers of expanded metal, and said layers are formed so that a layer with a smaller opening ratio becomes an outermost periphery.

24. A gas generator for an air bag according to claim 15, wherein said molded product of a porous plate is formed by superposing two or more different kinds of expanded metals.

25. A gas generator for an air bag according to claim 15, wherein said molded product of a porous plate comprises two or more different kinds of expanded metals, and said expanded metals are superposed on each other so that the opening ratios of thereof are the same.

26. A gas generator for an air bag according to claim 22, wherein said molded product of a porous plate is prevented from expanding due to a gas pressure.

27. A gas generator for an air bag according to claim 15, wherein said molded product of a porous plate comprises two or more layers of expanded metal, and a wire mesh is inserted inbetween.

28. A gas generator for an air bag according to claim 15, wherein said molded product of a porous plate comprises two or more layers of expanded metal, the layers are superposed so that a layer having a smaller opening ratio comes outer side and a layer having a greater opening ratio comes inner side, and a wire mesh is inserted inbetween.

29. A gas generator for an air bag according to claim 15, wherein said molded product of a porous plate comprises two or more layers of expanded metal, the outermost periphery layer comprises one layer or two layers, a wire mesh is inserted inbetween, and the inner periphery comprises two or more layers.

30. A gas generator for an air bag according to claim 15, wherein said molded product of a porous plate comprises two or more layers of expanded metal, and a plain dutch wire mesh is inserted inbetween.

31. A gas generator for an air bag according to claim 15, wherein said molded product of a porous plate has, as the outermost layer, a plain dutch wire mesh or a twilled dutch wire mesh.

32. A gas generator for an air bag according to claim 15, wherein said molded product of a porous plate comprises two or more layers of expanded metal which are superposed so that said layers intersect crosswise of one another with respect to a longitudinal direction of openings of the porous plate.

33. A gas generator for an air bag according to claim 15, wherein the interior space of said housing is divided into a combustion chamber storing at least gas generating means and a coolant accommodating chamber accommodating said coolant, and both said chambers are adjacent to in the axial direction of said housing, said housing is cylindrical in shape whose length in the axial direction is longer than its outermost diameter, and a peripheral wall of said housing has a plurality of gas discharge ports.

34. A gas generator for an air bag according to claim 15, wherein a ratio of a length in the axial direction to an inner diameter of said molded product of a porous plate is in a range of 0.3:1 to 5.0:1.

35. A gas generator for an air bag according to claim 1 or 15, wherein said housing is cylindrical in shape whose length in the axial direction is longer than its outermost diameter, a peripheral wall of said housing has a plurality of gas discharge ports, and a ratio of a length in the axial direction to an inner diameter of said molded product of a porous plate is in a range of 1.2:1 to 4.6:1

36. A gas generator for an air bag according to claim 17, wherein said molded product of a porous plate is produced by winding an expanded metal into a cylindrical shape, and spot-welding its winding end.

37. A gas generator for an air bag according to claim 17, wherein said molded product of a porous plate is produced by winding an expanded metal into a cylindrical shape, and spot-welding its winding ends in the axial direction and a center portion at one or more points.

38. A gas generator for an air bag according to claim 36 or 37, wherein said spot-welding is carried out by resistance welding.

39. A gas generator for an air bag according to claim 15, wherein said molded product of a porous plate is a coolant, and a cushion member which can extend and contract at least in the axial direction of said coolant is disposed on the upper end surface and/or the lower end surface of said coolant in the axial direction.

40. A gas generator for an air bag according to any one of claims 1, 3 and 9, wherein a bulk density of said molded product of a porous plate is in a range of 3.0 to 5.0 g/cm³.

41. A gas generator for an air bag according to any one of claims 1, 3 and 9, wherein said molded product of a porous plate comprises two or more layers of expanded metal, and a wire mesh is inserted inbetween.

42. A gas generator for an air bag according to any one of claims 1, 3 and 9, wherein said molded product of a porous plate comprises two or more layers of expanded metal which are superposed so that said layers intersect crosswise of one another with respect to a longitudinal direction of openings of the porous plate.

43. A gas generator for an air bag comprising in a cylindrical housing thereof having a plurality of gas discharge ports, an ignition means to be activated on an impact and gas generating means which is to be ignited and burnt by said ignition means and generate a combustion gas, wherein a molded product of a porous plate which is formed into a cylindrical shape by winding a porous plate member annularly is disposed in said housing as a coaxial coolant, and said porous plate member has SW in a range of 0.5 to 3, LW in a range of 1 to 6, W in a range of 0.1 to 1.5 and T in a range of 0.05 to 0.6.

44. A gas generator for an air bag according to claim 43, wherein a pressure loss of said molded product of a porous plate in the radial direction is smaller than the entire pressure loss of said plurality of gas discharge ports formed in said housing.

45. A gas generator for an air bag according to claim 43, wherein a bulk density of said molded product of a porous plate is in a range of 3.0 to 5.0 g/cm³.

46. A gas generator for an air bag according to claim 43, wherein said molded product of a porous plate comprises two or more layers of expanded metal, and said layers are superposed so that one having a smaller opening ratio comes outer side and the other having a greater opening ratio comes inner side.

47. A gas generator for an air bag according to claim 43, wherein said molded product of a porous plate comprises two or more layers of expanded metal, and a wire mesh is inserted inbetween.

48. A gas generator for an air bag according to claim 43, wherein said molded product of a porous plate comprises two or more layers of expanded metal which are superposed so that said layers intersect crosswise of one another with respect to a longitudinal direction of openings of said porous plate.

49. A gas generator for an air bag according to claim 43, wherein an interior space of said housing is divided into a combustion chamber in which at least gas generating means is accommodated and a coolant accommodating chamber in which said coolant is accommodated, and both said chambers are adjacent in the axial direction of said housing, said housing is cylindrical in shape whose length in the axial direction is longer than its outermost diameter, and a peripheral wall of said housing includes a plurality of gas discharge ports.

50. A gas generator for an air bag according to any one of claims 45, 47 and 48, wherein said molded product of a porous plate is an expanded metal.

51. An air bag comprising
a sensor for sensing an impact,
a gas generator activated when said sensor senses the impact to generate a gas,
an air bag introducing therein the gas generated by said gas generator, thereby expanding, and
a module case for accommodating therein said gas generator and said air bag, wherein
said gas generator for the air bag is the one described in claim 43.

52. A coolant of a gas generator for an air bag comprising a molded product of a porous plate comprising a porous plate member annularly wound into a cylindrical shape, wherein said porous plate member has SW in a range of 0.5 to 3, LW in a range of 1 to 6, W in a range of 0.1 to 1.5 and T in a range of 0.05 to 0.6.

53. A coolant of a gas generator for an air bag according to claim 52, wherein said coolant is disposed in a housing of said gas generator for the air bag, and said coolant cools and/or purifies an actuating gas discharged from said gas generator, and eliminates a mist in a generated gas.

54. A method for cooling and/or purifying an actuating gas discharged from a gas generator and eliminating a mist in a generated gas in the gas generator for an air bag by said coolant described in claim 52.
